# EUROPEAN PATENT APPLICATION

(11) **EP 4 056 973 A1**
(43) Date of publication of application: **14.09.2022**
(21) Application number: 21161411.0
(22) Date of filing: 09.03.2021
(51) Int. Cl.: G01K 7/42, H02P 29/60, G06F 30/23

(54) **METHOD OF MONITORING THE THERMAL BEHAVIOUR OF AN ELECTRICAL MACHINE**

(71) Applicant: ABB Schweiz AG, 5400 Baden (CH)
(72) Inventor: KAKOSIMOS, Panagiotis, 723 58 Västerås (SE); RÖNNBERG, Kristian, 723 40 Västerås (SE); CHEN, Wenliang, 114 20 Stockholm (SE); KOLONDJOVSKI, Zlatko, 01450 Vantaa (FI)
(74) Representative: Kransell & Wennborg KB

(57) **Abstract**

A method of monitoring the thermal behaviour of an electrical machine by means of a lumped parameter thermal network, LPTN, model, the LPTN model being formed of interconnected subnetworks describing different parts or portions of the electrical machine, wherein the method comprises: a) selecting a first node in the LPTN model, b) obtaining a reduced order LPTN model of the LPTN model, based on a sensitivity analysis of the LPTN model with respect to the first node or based on proximity of subnetworks with respect to the first node, the reduced order LPTN model comprising simplified subnetworks of the LPTN model and non-simplified subnetworks of the LPTN model, c) obtaining a temperature measurement from a location of the electrical machine which is represented as a second node in a non-simplified subnetwork or from a position of the electrical machine which is within a predefined maximum distance from a location of the electrical machine which is represented as a second node in a non-simplified subnetwork, and d) estimating the temperature in the first node based on the temperature measurement using the reduced order LPTN model.

## Description

### TECHNICAL FIELD

The present disclosure generally relates to thermal monitoring of electrical machines.

### BACKGROUND

Thermal models are used to predict the temperature and heat distribution in electrical machines. By knowing the temperature and heat distribution, monitoring and control of electrical machines may be improved.

EP3699566 A1 discloses online measurement of the temperature at a predetermined location in an electrical machine and calculation of the temperature at a predetermined position in the electrical machine very close to or at the position of the temperature sensor, using the temperature measurement and other parameter measurements. Model parameters can be adapted in this way.

Generally, thermal models for electrical machines are large and complex, which may require long processing time. Moreover, in EP3699566 A1 the temperature is estimated in a position very close to the temperature sensor. The calculation thus requires the presence of a temperature sensor very close to the position where temperature estimation is to be made.

### SUMMARY

In view of the above, a general object of the present disclosure is to provide a method of monitoring the thermal behaviour of an electrical machine which solves or at least mitigates the problems of the prior art.

There is hence according to a first aspect of the present disclosure provided a method of monitoring the thermal behaviour of an electrical machine by means of a lumped parameter thermal network, LPTN, model, the LPTN model being formed of interconnected subnetworks describing different parts or portions of the electrical machine, wherein the method comprises: a) selecting a first node in the LPTN model, b) obtaining a reduced order LPTN model of the LPTN model, based on a sensitivity analysis of the LPTN model with respect to the first node or based on proximity of subnetworks with respect to the first node, the reduced order LPTN model comprising simplified subnetworks of the LPTN model and non-simplified subnetworks of the LPTN model, c) obtaining a temperature measurement from a location of the electrical machine which is represented as a second node in a non-simplified subnetwork or from a position of the electrical machine which is within a predefined maximum distance from a location of the electrical machine which is represented as a second node in a non-simplified subnetwork, and d) estimating the temperature in the first node based on the temperature measurement using the reduced order LPTN model.

Less computational resources are required because of the use of the reduced order LPTN model. Further, the computational speed may be increased. Computational resources may be limited in monitoring systems for electrical machines, especially if the method is retrofitted to a monitoring system that has been used in the field for a period of many years.

Moreover, the first node does not have to represent a location close to a temperature sensor. The temperature measurement may be obtained from a location represented or being close enough to a node of a non-simplified subnetwork, which does not have to be a non-simplified subnetwork that contains the first node, to be able to estimate the temperature.

With "component" is meant a thermal resistance, a thermal capacitance, or a heat source.

With "sensitivity analysis" is meant an analysis or process where the amount of influence of each of the other components in the LPTN model on the first node is determined.

The electrical machine may be a motor or a generator.

The method may in step c) involve obtaining a plurality of temperature measurements, each from a location of the electrical machine which is represented as a node in a non-simplified subnetwork or which is within a predefined maximum distance from a location which is represented as a node in a non-simplified subnetwork, wherein step d) involves estimating the temperature in the first node based on the temperature measurements using the reduced order LPTN model.

Each temperature measurement may be associated with a respective non-simplified subnetwork.

According to one embodiment the reduced order LPTN model is based on proximity, wherein the simplified subnetworks are simplifications of subnetworks of the LPTN model comprising a node that has a physical representation in the electrical machine which is located at a distance greater than a distance threshold value from a physical location representing the first node.

According to one embodiment the reduced order LPTN model is based on sensitivity analysis, wherein the simplified subnetworks are simplifications of subnetworks of the LPTN model which only contain components having a parameter which in the sensitivity analysis was found to influence the temperature in the first node with less than a threshold value, and wherein the non-simplified subnetworks are subnetworks of the LPTN model which have at least one component with a parameter that in the sensitivity analysis was found to influence the temperature in the first node with at least the threshold value.

With "parameter" is meant the value of a thermal resistance, a thermal capacitance, or a heat source, or a weight value with which a thermal resistance, a thermal capacitance, or a heat source is scaled.

One embodiment comprises, after step c) but prior to step d), c1) estimating the temperature in the second node, c2) comparing the estimated temperature with the temperature measurement, and in case of a deviation which is larger than a comparison threshold value, c3) adjusting at least one parameter of said non-simplified subnetwork in the LPTN model, and repeating steps c1)-c3) until in step c2) any deviation is less than the comparison threshold value.

The LPTN model is thus improved in accuracy as it provides a more accurate estimation of the temperature in the first node because of the more accurate estimation of the temperature in the second node. This is because the non-simplified subnetwork containing the second node influences the temperature in the first node with at least the threshold value.

One embodiment comprises, only in case the at least one parameter which has been adjusted has a value which is outside a range used for performing the sensitivity analysis, updating the sensitivity analysis of the LPTN model with respect to the first node based only on the at least one parameter after the at least one parameter has been adjusted and any deviation is less than the comparison threshold value, obtaining an updated reduced order LPTN model based on the updated sensitivity analysis, and performing step d) using the updated reduced order LPTN model.

When performing sensitivity analysis, the parameters of the components may generally not be swept over their entire range, but only over a subrange. Thus, in case the at least one parameter obtains a value after adjustment which is outside the subrange used in the sensitivity analysis, the sensitivity analysis is updated.

According to one embodiment the simplified subnetworks of the LPTN model are equivalent thermal circuits.

According to one embodiment the non-simplified subnetworks have the same component layout in the reduced order LPTN model as in the LPTN model.

According to one embodiment the different parts or portions of the electrical machine comprise at least a rotor, a stator frame, stator windings, and bearings.

There is according to a second aspect of the present disclosure provided a computer program comprising computer code which when executed by processing circuitry of a monitoring system causes the monitoring system to perform the method of the first aspect.

There is according to a third aspect of the present disclosure provided a monitoring system for monitoring the thermal behaviour an electrical machine by means of a lumped parameter thermal network, LPTN, model, the LPTN model being formed of subnetworks describing different parts or portions of the electrical machine, the monitoring system comprising: processing circuitry, and a storage medium comprising computer code which when executed by the processing circuitry causes the monitoring system to perform the method according to the first aspect.

There is according to a fourth aspect of the present disclosure provided an electrical machine assembly comprising: an electrical machine, a plurality of temperature sensors configured to measure a temperature of the electrical machine in a respective location, and a monitoring system according to the third aspect, configured to receive temperature measurements from the temperature sensors.

Generally, all terms used in the claims are to be interpreted according to their ordinary meaning in the technical field, unless explicitly defined otherwise herein. All references to "a/an/the element, apparatus, component, means, etc. are to be interpreted openly as referring to at least one instance of the element, apparatus, component, means, etc., unless explicitly stated otherwise.

### BRIEF DESCRIPTION OF THE DRAWINGS

The specific embodiments of the inventive concept will now be described, by way of example, with reference to the accompanying drawings, in which:
Fig. 1 schematically shows an example of a monitoring system for monitoring the thermal behaviour of an electrical machine;
Fig. 2 schematically shows an electrical machine assembly;
Figs 3A-3B are flowcharts of methods of monitoring the thermal behaviour of an electrical machine by means of the monitoring system of Fig. 1;
Fig. 4A schematically shows an LPTN model; and
Fig. 4B schematically shows a reduced order LPTN model.

### DETAILED DESCRIPTION

The inventive concept will now be described more fully hereinafter with reference to the accompanying drawings, in which exemplifying embodiments are shown. The inventive concept may, however, be embodied in many different forms and should not be construed as limited to the embodiments set forth herein; rather, these embodiments are provided by way of example so that this disclosure will be thorough and complete, and will fully convey the scope of the inventive concept to those skilled in the art. Like numbers refer to like elements throughout the description.

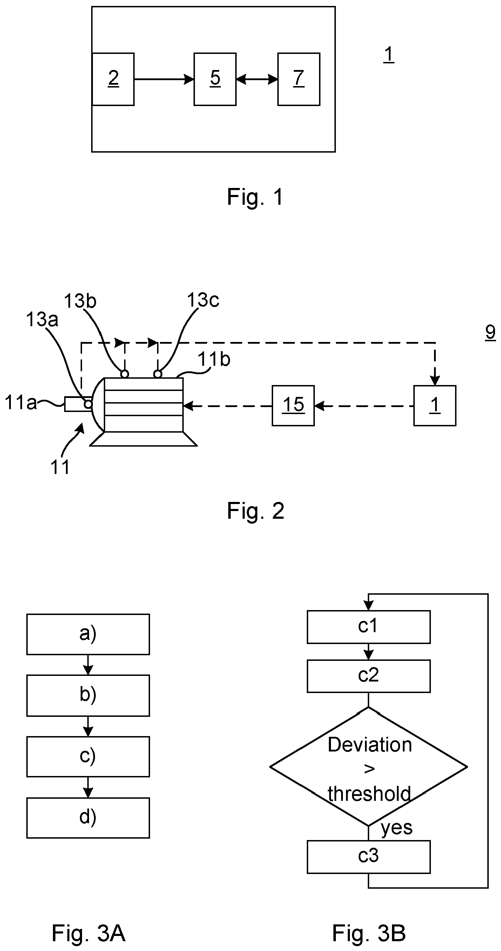

Fig. 1 shows an example of a monitoring system 1 for monitoring the thermal behaviour an electrical machine by means of an LPTN model.

The monitoring system 1 may be configured to control the electrical machine based on the monitored thermal behaviour.

The electrical machine comprises a plurality of temperature sensors configured to measure the temperature at a respective location of the electrical machine. The temperature sensors may for example be configured to detect the temperature of the stator windings, the rotor windings, the rotor surface, the stator frame, and/or the bearings.

The monitoring system 1 comprises an input unit 2 configured to receive temperature measurement from the temperature sensors.

The monitoring system 1 comprises processing circuitry 5 configured to receive the temperature measurements from the input unit 2 and to process these measurements to monitor the thermal behaviour of the electrical machine.

The monitoring system 1 may comprise a storage medium 7. The storage medium 7 may comprise a computer program including computer code which when executed by the processing circuitry 7 causes the monitoring system 1 to perform the method as disclosed herein.

The processing circuitry 5 may for example use any combination of one or more of a suitable central processing unit (CPU), multiprocessor, microcontroller, digital signal processor (DSP), application specific integrated circuit (ASIC), field programmable gate arrays (FPGA) etc., capable of executing any herein disclosed operations concerning monitoring of the thermal behaviour of the electrical machine.

The storage medium 7 may for example be embodied as a memory, such as a random access memory (RAM), a read-only memory (ROM), an erasable programmable read-only memory (EPROM), or an electrically erasable programmable read-only memory (EEPROM) and more particularly as a non-volatile storage medium of a device in an external memory such as a USB (Universal Serial Bus) memory or a Flash memory, such as a compact Flash memory.

Fig. 2 shows an electrical machine assembly 9 comprising the monitoring system 1 and an electrical machine 11. The monitoring system 1 may be a physical unit e.g. at the location of the electrical machine or it may be provided in the cloud.

The electrical machine 11 has a rotor having a rotor shaft 11a, a stator configured to electromagnetically interact with the rotor, and a stator frame 11b. The rotor shaft 11a is rotatable relative to the stator frame 11b. The electrical machine 11 comprises bearings to enable rotation of the rotor shaft 11a relative to the stator frame 11b.

The electrical machine assembly 9 comprises a plurality of temperature sensors 13a-13c. A first temperature sensor 13a of the temperature sensors may for example be configured to measure the temperature of the bearing outer race. A second and a third temperature sensor 13b and 13c may for example be configured to measure the temperature of the stator chassis at different locations thereof.

The temperature sensors 13a-13c may be connected to the monitoring system 1. The temperature sensors 13a-13c are configured to provide temperature measurements to the monitoring system 1.

The storage medium 7 may store an LPTN model of the electrical machine 11. The LPTN model models the thermal behaviour of the electrical machine 11. The LPTN model is formed by a plurality of interconnected subnetworks. Each subnetwork describes the thermal behaviour of a respective part or portion of the electrical machine 11. Each subnetwork may be formed by one or more nodes, one or more thermal resistances and/or thermal capacitances, and/or heat sources. One subnetwork may for example describe the thermal behaviour of the bearing outer race, of the bearing inner race, or of a complete bearing. Another subnetwork may for example describe the thermal behaviour of another bearing outer race, of another bearing inner race, or another complete bearing. One subnetwork may describe the thermal behaviour of the stator windings, of a section of the stator frame, the complete stator frame, of the complete rotor, or the rotor winding.

The monitoring system 1 is configured to monitor the thermal behaviour of the electrical machine 11 based on the temperature measurements from the temperature sensors 13a-13c using a reduced order LPTN model of the LPTN model.

The electrical machine assembly 9 may comprise a power converter 15. The monitoring system 1 may be configured to control the power converter 15 to thereby control the electrical machine 11. The control of the power converter 15 may be based on the thermal behaviour of the electrical machine 11 as determined based on the monitoring.

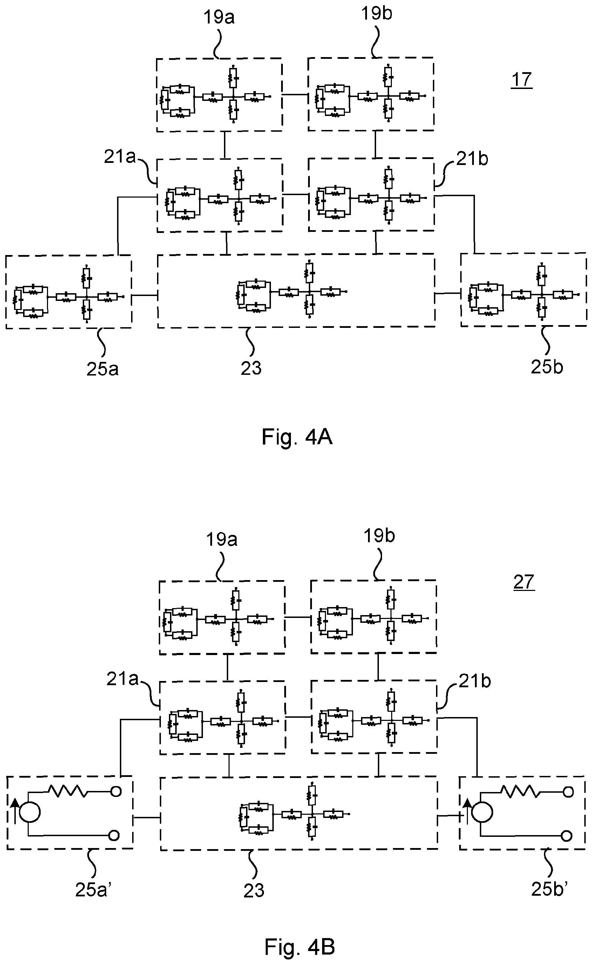

A method of monitoring the thermal behaviour of the electrical machine 11 by means of the monitoring system 1 will now be described with reference to Figs 3A, 3B and Figs 4A-4B.

In a step a) a first node in the LPTN model is selected.

The node may for example be selected by the monitoring system 1. Typically, the method is performed for each node of the LPTN model to thereby obtain a complete understanding of the thermal behaviour of the electrical machine 11. Thus, the selection may for example be made according to an order in a list or array representing all the nodes of LPTN model, or all nodes may be selected simultaneously or essentially simultaneously, and the method steps disclosed herein may be carried out in parallel for all or some of the first nodes.

In a step b) a reduced order LPTN model of the LPTN model is obtained.

The reduced order LPTN model is obtained based on a sensitivity analysis of the LPTN model with respect to the first node or based on proximity of subnetworks with respect to the first node.

As the method may be performed for all the nodes in the LPTN mode, a respective reduced order LPTN model is obtained for each node of the LPTN model.

The reduced order LPTN model comprises simplified subnetworks of the LPTN model and non-simplified subnetworks of the LPTN model.

The simplified subnetworks are equivalent thermal circuits. The non-simplified subnetworks have the same component or circuit layout in the reduced order LPTN model as in the LPTN model.

The first node forms part of a non-simplified subnetwork of the reduced order LTPN. The first node is hence included in a subnetwork that is not simplified in the reduced order LPTN model.

In case the reduced order LPTN model is obtained based on proximity, subnetworks comprising a node that has a physical representation in the electrical machine which is located at a distance greater than a distance threshold value from a physical location representing the first node are simplified in the reduced order LPTN model. The remaining subnetworks are maintained the same, i.e. as non-simplified subnetworks, in the reduced order LPTN model as in the LPTN model.

In case the reduced order LPTN model is based on proximity, each node of the LPTN model may be associated with a data structure such as an array in which each element is associated with a respective subnetwork of the LPTN model. The elements contain data about the proximity of the corresponding subnetwork from the node in question. The reduced order LPTN for the first node is obtained or generated, based on the content of the data structure for the first node. Any subnetwork that is further distanced from the first node than the distance threshold value may be simplified by forming an equivalent thermal circuit.

In case the reduced order LPTN model is based on sensitivity analysis, the simplified subnetworks are simplifications of subnetworks of the LPTN model which only contain components having a parameter which in the sensitivity analysis was found to influence the temperature in the first node with less than a threshold value. The non-simplified subnetworks are subnetworks of the LPTN model which have at least one component with a parameter that in the sensitivity analysis was found to influence the temperature in the first node with at least the threshold value.

In case the reduced order LPTN model is based on sensitivity analysis, each node of the LPTN model may be associated with a data structure such an array in which each element is associated with a respective subnetwork of the LPTN model. The elements contain data about whether the corresponding subnetwork influences the temperature in the first node with at least the threshold value or not. The reduced order LPTN for the first node is obtained or generated, based on the content of the data structure for the first node. Any subnetwork that influences the temperature in the first node with less than the threshold value may be simplified by forming an equivalent thermal circuit.

The full sensitivity analysis of all the nodes of the LPTN model is generally performed offline and may require substantial computational resources and/or take a substantial amount of time to complete. The method of steps a)-d) is typically carried out online.

In a step c) a temperature measurement is obtained. The temperature measurement is a temperature measurement from a location of the electrical machine which is represented as a second node, different from the first node, in a non-simplified subnetwork or from a position of the electrical machine which is within a predefined maximum distance from a location of the electrical machine which is represented as a second node in a non-simplified subnetwork. In case the position where the temperature is measured is close enough to the location, which is represented as a node, the calculations described herein will be "good enough". Generally, the position may in this case be within the same region as described thermally by the subnetwork in which the first node is arranged, or described thermally by a subnetwork which describes a region of the electrical machine located adjacent to the subnetwork in which the first node is arranged.

The non-simplified subnetwork mentioned above in step c) may be any non-simplified subnetwork present in the reduced order LPTN. The non-simplified subnetwork may be the subnetwork in which the first node is located or any other non-simplified subnetwork in the reduced order LPTN, for example a non-simplified subnetwork located adjacent to the non-simplified subnetwork in which the first node is located.

The temperature measurement is obtained by the monitoring system 1 from a temperature sensor 13a-13c.

According to one example, in step c), a plurality of temperature measurements may be obtained, each temperature measurement originating from a respective temperature sensor 13a-13c.

One example comprises, after step c) but prior to a step d), a step c1) of estimating the temperature in the second node. In a step c2) the estimated temperature is compared with the temperature measurement. In case of a deviation which is larger than a comparison threshold value, in a step c3) at least one parameter of the non-simplified subnetwork in which the node is located, is adjusted in the LPTN model. The at least one parameter adjustment is thus performed in the full LPTN model. Steps c1)-c3) are repeated until in step c2) any deviation is less than the comparison threshold value.

The LPTN model which has been updated may be reduced to obtain an updated reduced order LPTN, after it has been updated and the deviation is less than the comparison threshold value.

According to one example, if the LPTN model is simplified based on sensitivity analysis, only in case the at least one parameter which has been adjusted in step c3) has a value which is outside a range used for performing the sensitivity analysis, the sensitivity analysis of the LPTN model is updated with respect to the first node based only on the at least one parameter after the at least one parameter has been adjusted and any deviation is less than the comparison threshold value. An updated reduced order LPTN model is then obtained based on the updated sensitivity analysis. The data in the corresponding element(s) in the data structure may thus be updated.

In a step d) the temperature in the first node is estimated based on the temperature measurement using the reduced order LPTN model. The temperature measurement is thus used as an input to the reduced order LPTN model.

In case of a plurality of temperature measurements, the estimation in step d) is based on the temperature measurements, using the reduced order LPTN model.

In case the reduced order LPTN model has been updated, step d) is performed using the updated reduced order LPTN model.

Figs 4A and 4B schematically illustrates how an LPTN model may be reduced based on proximity or sensitivity analysis.

In Fig. 4A, an LPTN model 17 is shown. The exemplified LPTN model 17 comprises a plurality of subnetworks 19a-25b. In the example, each subnetwork is symbolically indicated by a dashed box, with a schematic illustration of a subnetwork shown inside the dashed box. According to the example, subnetworks 19a and 19b represent different sections of the stator frame, subnetworks 21a and 21b represent different sections of the stator windings, subnetwork 23 represents the rotor, and subnetworks 25a and 25b represent a respective bearing.

For the purpose of the example, it is assumed that in step a) the first node is a node in the stator windings in the subnetwork 21a. Based on sensitivity analysis, it may according to this example be concluded that the subnetworks 25a and 25b describing the bearings influence the temperature in the first node with less than the threshold value. The subnetworks 25a and 25b are therefore simplified as equivalent thermal circuits 25a' and 25b' in the reduced order LPTN model 27 depicted in Fig. 4A. The rest of the subnetworks 19a-19b, 21a, 21b and 23 are maintained the same in the reduced order LPTN model 27 as in the LPTN model 17 and are thus non-simplified subnetworks. The same conclusions as from the sensitivity analysis may or may not be drawn based on proximity. Thus, the reduced order LPTN model 27 may potentially look the same, or slightly differently, in case the reduction is based on proximity instead of sensitivity analysis.

The inventive concept has mainly been described above with reference to a few examples. However, as is readily appreciated by a person skilled in the art, other embodiments than the ones disclosed above are equally possible within the scope of the inventive concept, as defined by the appended claims.

## Claims

1. A method of monitoring the thermal behaviour of an electrical machine (11) by means of a lumped parameter thermal network, LPTN, model (17), the LPTN model (17) being formed of interconnected subnetworks (19a, 19b, 21a, 21b, 23, 25a, 25b) describing different parts or portions of the electrical machine (11), wherein the method comprises:
a) selecting a first node in the LPTN model (17),
b) obtaining a reduced order LPTN model (27) of the LPTN model (17), based on a sensitivity analysis of the LPTN model (27) with respect to the first node or based on proximity of subnetworks (19a, 19b, 21a, 21b, 23, 25a, 25b) with respect to the first node, the reduced order LPTN model (27) comprising simplified subnetworks (25a', 25b') of the LPTN model (17) and non-simplified subnetworks of the LPTN model (17),
c) obtaining a temperature measurement from a location of the electrical machine (11) which is represented as a second node in a non-simplified subnetwork or from a position of the electrical machine (11) which is within a predefined maximum distance from a location of the electrical machine (11) which is represented as a second node in a non-simplified subnetwork, and
d) estimating the temperature in the first node based on the temperature measurement using the reduced order LPTN model (27).

2. The method as claimed in claim 1, wherein the reduced order LPTN model (27) is based on proximity, wherein the simplified subnetworks are simplifications of subnetworks of the LPTN model (17) comprising a node that has a physical representation in the electrical machine which is located at a distance greater than a distance threshold value from a physical location representing the first node.

3. The method as claimed in claim 1, wherein the reduced order LPTN model is based on sensitivity analysis, wherein the simplified subnetworks are simplifications of subnetworks of the LPTN model which only contain components having a parameter which in the sensitivity analysis was found to influence the temperature in the first node with less than a threshold value, and wherein the non-simplified subnetworks are subnetworks of the LPTN model (17) which have at least one component with a parameter that in the sensitivity analysis was found to influence the temperature in the first node with at least the threshold value.

4. The method as claimed in claim 2 or 3, comprising after step c) but prior to step d), c1) estimating the temperature in the second node, c2) comparing the estimated temperature with the temperature measurement, and in case of a deviation which is larger than a comparison threshold value, c3) adjusting at least one parameter of said non-simplified subnetwork in the LPTN model (17), and repeating steps c1)-c3) until in step c2) any deviation is less than the comparison threshold value.

5. The method as claimed in claim 4 dependent of claim 3, comprising, only in case the at least one parameter which has been adjusted has a value which is outside a range used for performing the sensitivity analysis, updating the sensitivity analysis of the LPTN model (17) with respect to the first node based only on the at least one parameter after the at least one parameter has been adjusted and any deviation is less than the comparison threshold value, obtaining an updated reduced order LPTN model (27) based on the updated sensitivity analysis, and performing step d) using the updated reduced order LPTN model (27).

6. The method as claimed in any of the preceding claims, wherein the simplified subnetworks of the LPTN model (17) are equivalent thermal circuits.

7. The method as claimed in any of the preceding claims, wherein the non-simplified subnetworks have the same component layout in the reduced order LPTN model (27) as in the LPTN model (17).

8. The method as claimed in any of the preceding claims, wherein the different parts or portions of the electrical machine comprise at least a rotor, a stator frame, stator windings, and bearings.

9. A computer program comprising computer code which when executed by processing circuitry (5) of a monitoring system (1) causes the monitoring system (1) to perform the method of any of the preceding claims.

10. A monitoring system (1) for monitoring the thermal behaviour an electrical machine by means of a lumped parameter thermal network, LPTN, model, the LPTN model being formed of subnetworks describing different parts or portions of the electrical machine, the monitoring system comprising:
processing circuitry (5), and
a storage medium (7) comprising computer code which when executed by the processing circuitry (5) causes the monitoring system (1) to perform the method as claimed in any of claims 1-9.

11. An electrical machine assembly (9) comprising:
an electrical machine (11),
a plurality of temperature sensors (13a-13c) configured to measure a temperature of the electrical machine (11) in a respective location, and
a monitoring system (1) as claimed in claim 10, configured to receive temperature measurements from the temperature sensors (13a-13c).
